Europäisches Patentamt

(19) European Patent Office

Office européen des brevets

(11) Numéro de publication: **0 246 486**
**B1**

(12) **FASCICULE DE BREVET EUROPEEN**

(45) Date de publication du fascicule du brevet:
07.03.90

(51) Int. Cl.⁴: **F28F 9/00**, F23L 15/04

(21) Numéro de dépôt: 87106491.1

(22) Date de dépôt: 05.05.87

(54) Echangeur de rechauffage d'air sous pression en contrecourant de fumées circulant dans des faisceaux tubulaires.

(30) Priorité: 06.05.86 FR 8606524

(43) Date de publication de la demande:
25.11.87 Bulletin 87/48

(45) Mention de la délivrance du brevet:
07.03.90 Bulletin 90/10

(84) Etats contractants désignés:
BE DE ES FR GB IT NL

(56) Documents cités:
DE-A- 3 421 746
DE-C- 402 945
FR-A- 892 762
FR-A- 1 482 444
FR-A- 2 262 273
US-A- 1 886 670
US-A- 2 838 287

(73) Titulaire: STEIN INDUSTRIE Société Anonyme dite:,
19-21, avenue Morane Saulnier, F-78140 Vélizy
Villacoublay(FR)

(72) Inventeur: Aivaz, Guy, 93 Les Cottages Cerney La Ville,
F-78720 Dampierre(FR)

(74) Mandataire: Weinmiller, Jürgen et al,
Lennéstrasse 9 Postfach 24, D-8133 Feldafing(DE)

ACTORUM AG

## Description

La présente invention concerne un échangeur vertical de réchauffage d'air sous pression en contre-courant de fumées circulant dans des faisceaux tubulaires, contenu dans une virole cylindrique contenant au moins un joint de dilatation, les faisceaux tubulaires étant répartis régulièrement en couronne entre deux zones, une zone axiale et une zone périphérique de circulation de l'air, et leur poids étant transmis à des appuis périphériques entourant la partie inférieure de l'échangeur.

On connaît déjà des réchauffeurs d'air à faisceau tubulaires parcourus par des fumées. Ils sont contenus dans une enveloppe de forme parallélépipédique. Ils nécessitent des renforts importants pour permettre à leurs parois de résister à la pression interne de l'air. Ils doivent comporter un calorifugeage intérieur pour éviter que les parois ne soient soumises à un gradient de température trop élevé en fonctionnement. Par ailleurs, le poids des tubes de passage des fumées étant supporté par la partie inférieure de l'échangeur, la dilatation des faisceaux tubulaires s'effectue du bas vers le haut. Il est donc nécessaire de disposer à la partie supérieure de l'échangeur, la plus chaude, des compensateurs de dilatation assurant l'étanchéité entre les zones de passage d'air et de fumées.

Or, le document US-A 2 838 287 décrit un réchauffeur d'air à virole cylindrique pour centrale thermique dans lequel le trajet de l'air circulant autour des tubes d'un faisceau est rendu sinueux par des chicanes.

Enfin, dès que les débits d'air traité sont importants, comme dans les réchauffeurs d'air pour centrales thermiques, les échangeurs doivent comporter des faisceaux tubulaires de grandes dimensions, qu'il n'est pas possible de préfabriquer en usine. Il y a donc lieu d'effectuer sur le lieu de montage un grand nombre de mises en place de tubes dans les plaques tubulaires, en général par dudgeonnage.

En particulier, le document DE-A 3 421 746 décrit un échangeur vertical de réchauffage d'air sous pression en contre-courant de fumées circulant dans des faisceaux tubulaires contenus dans une virole cylindrique s'étendant du haut jusqu'au bas de celle-ci, et répartis en couronne entre une zone axiale et une zone périphérique de circulation de l'air, qui s'écoule d'abord dans un sens général parallèle à celui des fumées, s'élève dans une double enveloppe, puis revient s'écouler dans un sens général contraire à celui des fumées, avant d'être évacué par une cheminée centrale. Des chicanes fixées à des viroles internes et aux tubes des faisceaux contraignent l'air à réchauffer à s'écouler alternativement de la zone axiale vers la zone périphérique, et inversement. Un tel dispositif est complexe, ne se prête pas à une préfabrication en usine et subit des contraintes mécaniques importantes dues aux dilatations thermiques différentielles des tubes des faisceaux et des viroles internes.

La présente invention a pour but de procurer un échangeur de ce genre de structure plus simple, qui se prête à une préfabrication en usine, n'implique pas d'opérations de dudgeonnage de tubes dans des plaques tubulaires sur chantier et ne soit pas soumis en service à des contraintes mécaniques notables résultant de dilatations différentielles.

L'échangeur selon l'invention est caractérisé en ce que ses faisceaux tubulaires sont séparés par des chicanes radiales, en ce que ces chicanes sont reliées aux plaques tubulaires supérieures de support des faisceaux, de façon à transmettre le poids de ceux-ci aux appuis périphériques, et en ce que des joints de dilatation sont disposés entre la partie inférieure de la virole cylindrique et les plaques tubulaires inférieures des faisceaux.

Il répond en outre de préférence à au moins l'une des caractéristiques suivantes:

– Ses faisceaux tubulaires sont subdivisés en plusieurs faisceaux élémentaires superposés, les zones axiales et périphériques sont munies de chicanes imposant à l'air de circuler alternativement de la zone axiale vers la zone périphérique, puis de la zone périphérique vers la zone axiale, ou réciproquement, en courants croisés avec les fumées circulant dans les faisceaux élémentaires.

– Il comporte des gaines d'arrivée d'air froid et d'évacuation d'air réchauffé au-dessous et au-dessus de la zone axiale.

– Il comporte une première couronne de faisceaux tubulaires de passage de fumées disposée sur le trajet d'un premier circuit d'air, au moins une deuxième couronne de faisceaux tubulaires de passage de fumées, séparée de la première couronne et disposée sur le trajet d'un deuxième circuit d'air coaxial au premier.

Il est décrit ci-après, à titre d'exemples et en référence aux figures du dessin annexé, des échangeurs verticaux de réchauffage d'air sous pression à contre-courant de fumées.

La figure 1 représente en coupe par un plan diamétral vertical (axe I–I de la figure 2) un échangeur comportant une couronne unique de faisceaux tubulaires, et une entrée et une sortie d'air uniques.

La figure 2 représente une vue de même échangeur, partie en plan, partie en coupe selon l'axe horizontal II–II de la figure 1.

La figure 3 représente en coupe par un plan diamétral vertical un échangeur comportant une double couronne de faisceaux tubulaires, avec deux circuits d'air séparés.

La figure 4 représente une vue du même échangeur, partie en plan, partie en coupe selon un plan horizontal.

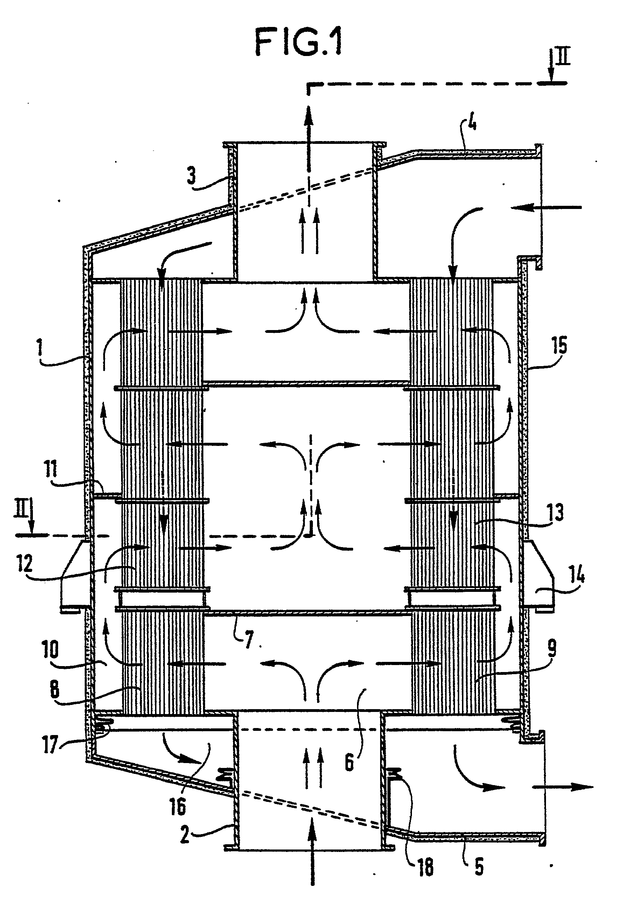

Dans la figure 1, la virole 1 de l'échangeur est reliée à des tubulures axiales 2 d'introduction d'air froid et 3 d'évacuation d'air réchauffé, et à des gaines annulaires 4, 5 d'introduction de fumées chaudes et d'évacuation de fumées refroidies.

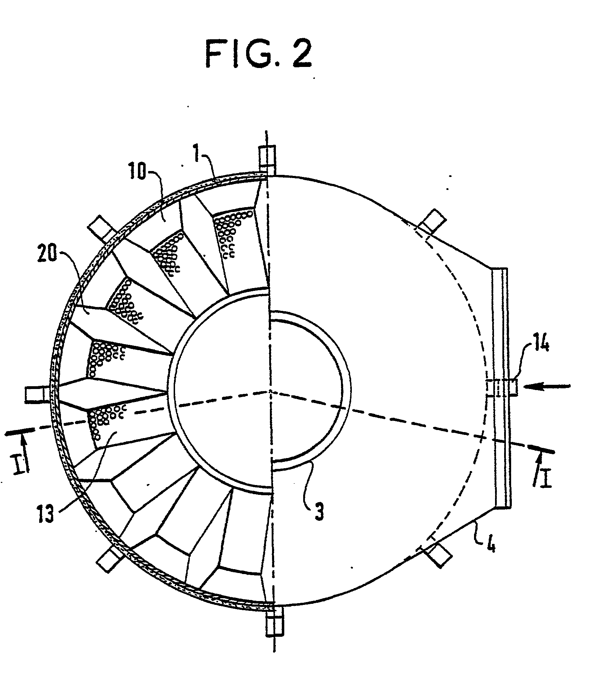

L'air froid pénètre par la tubulure inférieure 2 dans une zone axiale 6 fermée par une chicane horizontale 7. Comme représenté par les flèches, il s'échappe latéralement en traversant à courants croisés des faisceaux tubulaires tels que 8, 9, répartis en couronnes, comme on le voit par la figure 2. Il s'élève alors par la zone annulaire 10. Rencontrant la chicane annulaire 11, il est contraint de revenir vers la zone axiale, en traversant radialement des faisceaux tubulaires tels que 12, 13. Puis il est de nouveau dérivé vers la zone annulaire par une nouvelle chicane, et ainsi de suite. Il s'évacue en fin de compte par la tubulure axiale supérieure 3.

Les fumées chaudes sont introduites par la gaine supérieure 4 dans les faisceaux tubulaires supérieurs. Elles traversent verticalement les faisceaux tubulaires successifs, puis sont évacuées par la gaine inférieure 5.

Les faisceaux tubulaires tels que 8, 9, 12, 13 sont préfabriqués en usine, et il suffit sur le chantier de les monter entre des chicanes radiales telles que 20, (figure 2), et de les souder aux différents fonds. Le fractionnement du faisceau dans sa hauteur permet le retubage éventuel des faisceaux de la partie inférieure tels que 8 et 9.

L'ensemble de l'échangeur est munie d'appuis tels que 14, permettant de le faire reposer sur des poutres du support. Un calorifuge 15 est disposé sur la face externe de la virole.

Pour compenser les dilatations différentielles de la virole et des faisceaux tubulaires, le fond 16 solidaire des plaques tubulaires inférieures est relié par un soufflet de dilatation 17 à la partie inférieure de la virole. La tubulure d'admission d'air froid et la gaine d'évacuation des fumées refroidies sont reliées également par un soufflet de dilatation 18.

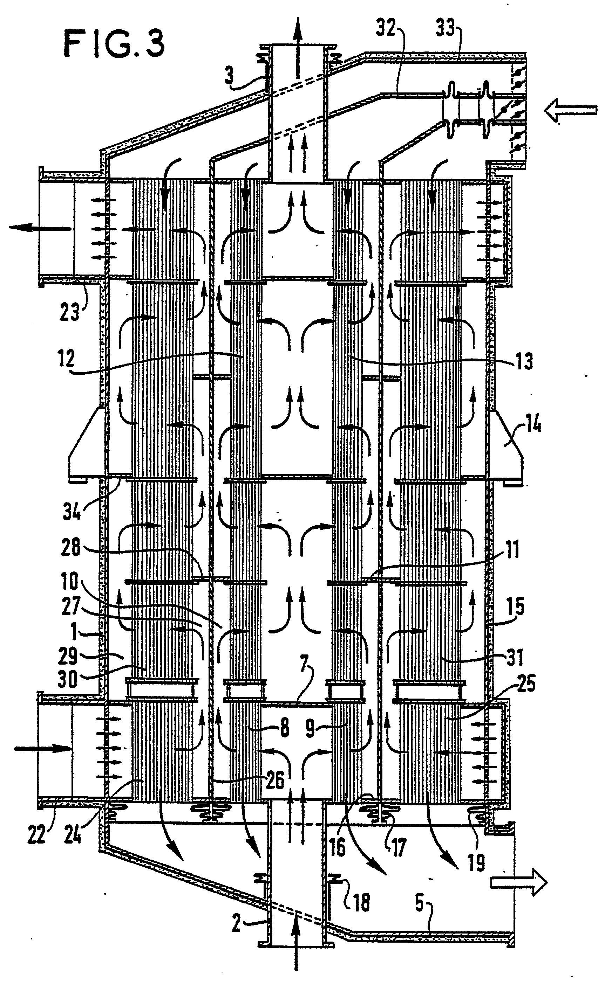

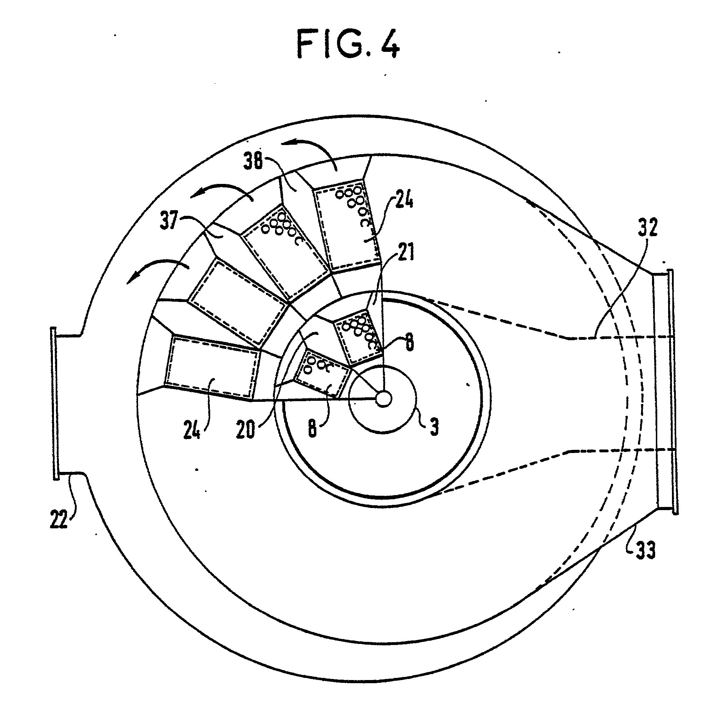

L'échangeur représenté en figures 3 et 4 est à double circuit d'air à réchauffer et de fumées à refroidir. Il comporte comme le précédent une tubulure axiale inférieure 2 d'introduction d'air froid et une tubulure axiale supérieure 3 d'évacuation d'air réchauffé. Les deux circuits d'air sont figurés par des flèches. Le circuit d'air axial est séparé d'un circuit d'air périphérique par une cloison cylindrique 26, délimitant une zone de circulation externe 10 de circuit d'air axial et une zone de circulation interne 27 du circuit d'air périphérique.

Le trajet de l'air du circuit axial est analogue à celui décrit cidessus en référence aux figures 1 et 2, et ne sera pas décrit à nouveau, mais il est délimité extérieurement non par la virole, mais par la cloison 26.

Le trajet de l'air du circuit périphérique est le suivant. Il pénètre dans une gaine circulaire par une tubulure 22 et traverse la virole par des ouvertures pratiquées en face des faisceaux tubulaires tels que 24, 25 répartis régulièrement sur le pourtour de la virole et séparés par des cloisons radiales telles que 37, 38 comme représenté en figure 4.

Il traverse radialement à courants croisés ces faisceaux tubulaires, puis s'élève dans la zone annulaire interne 27. Il est dévié à nouveau par une chicane 28 vers la zone annulaire externe 29, et traverse radialement le faisceau 30. S'élevant dans cette zone externe il est dévié à nouveau vers la zone 27 par une chicane 34, et ainsi de suite. Comme pour son entrée dans l'échangeur, il est finalement évacué à la partie supérieure en traversant la virole, et, est collecté dans une gaine circulaire reliée à la tubulure de sortie 23.

Les fumées chaudes sont introduites dans le haut de l'échangeur par les gaines concentriques 32, 33.

La gaine 32 sert à l'introduction de la partie des fumées venant en échange de chaleur avec le courant d'air axial. Ces fumées s'écoulent vers le bas de l'échangeur à travers des faisceaux tubulaires successifs, tels que les faisceaux 8, 9. Elles sont évacuées refroidies par la gaine 5.

Les fumées venant en échange de chaleur avec le circuit d'air périphérique sont introduites par la gaine 33. Elles s'écoulent vers le bas par des faisceaux tubulaires successifs tels que 24, 25 et sont évacuées avec les autres par la gaine 5.

Pour compenser les dilatations différentielles des faisceaux tubulaires et des viroles, les fonds solidaires des plaques tubulaires inférieures sont reliés par des soufflets 17, 19 à la partie inférieure de la virole. La tubulure 2 d'introduction d'air froid et la gaine 5 d'évacuation des fumées refroidies sont reliées par un soufflet 18.

## Revendications

1. Echangeur vertical de réchauffage d'air sous pression en contrecourant de fumées circulant dans des faisceaux tubulaires contenus dans une virole cylindrique (1) contenant au moins un joint de dilatation, les faisceaux tubulaires (8, 9, 12, 13; 24, 25, 30, 31) étant répartis régulièrement en couronne entre deux zones, une zone axiale (6 et 27) et une zone périphérique (10, 29) de circulation de l'air, et leur poids étant transmis à des appuis périphériques (14) entourant la partie inférieure de l'échangeur, caractérisé en ce que les faisceaux tubulaires sont séparés par des chicanes radiales (20, 21; 37, 38), en ce que ces chicanes sont reliées aux plaques tubulaires supérieures de support des faisceaux, de façon à transmettre le poids de ceux-ci aux appuis périphériques (14), et en ce que des joints de dilatation (17, 19) sont disposés entre la paroi inférieure de la virole cylindrique (1) et les plaques tubulaires inférieures des faisceaux (16).

2. Echangeur selon la revendication 1, caractérisé en ce que les faisceaux tubulaires sont subdivisés en plusieurs faisceaux élémentaires superposés (8, 12, ..., 9, 13) en ce que les zones axiales et périphériques sont munies de chicanes (7, 11; 28, 34) imposant à l'air de circuler alternativement de la zone axiale vers la zone périphérique, puis de la zone périphérique vers la zone axiale, ou réciproquement, en courants croisés avec les fumées circulant dans les faisceaux élémentaires.

3. Echangeur selon les revendications 1 ou 2, caractérisé en ce qu'il comporte des gaines d'arrivée d'air froid (2, figure 1) et d'évacuation d'air réchauffé (3) au-dessous et au-dessus de la zone axiale.

4. Echangeur selon l'une des revendications 1 à 3, caractérisé en ce qu'il comporte une première couronne de faisceaux tubulaires (8, 9, 12, 13) de passage de fumées disposée sur le trajet d'un premier circuit d'air, au moins une deuxième couronne de faisceaux tubulaires (24, 25, 30, 31 figure 3) de passage de fumées séparée de la première couronne et disposée sur le trajet d'un deuxième circuit d'air coaxial au premier.

## Patentansprüche

1. Senkrecht arbeitender Wärmetauscher zur Erwärmung von unter Druck stehender Luft im Gegenstrom zu Rauchgasen, die durch von einem zylindrischen Mantel (1) umschlossene Rohrbündel strömen, wobei der Mantel mindestens eine Dehnungsdichtung enthält und die Rohrbündel (8, 9, 12, 13; 24, 25, 30, 31) regelmäßig in Kranzform über zwei Luftumwälzzonen verteilt sind, eine axiale Zone (6 und 27) und eine periphere Zone (10, 29), und wobei ihr Gewicht auf periphere Stützen (14) übertragen wird, die den unteren Teil des Wärmetauschers umgeben, dadurch gekennzeichnet, daß die Rohrbündel durch radiale Prallbleche (20, 21; 37, 38) voneinander getrennt sind, daß die Prallbleche an den oberen Halterohrböden befestigt sind, derart, daß das Gewicht derselben auf die peripheren Stützen (14) übertragen wird, und daß zwischen der unteren Wand des zylindrischen Mantels (1) und den unteren Rohrböden (16) Dehnungsdichtungen (17, 19) angebracht sind.

2. Wärmetauscher nach Anspruch 1, dadurch gekennzeichnet, daß die Rohrbündel in mehrere Übereinandergesetzte Elementarbündel (8, 12, ... 9, 13) unterteilt sind und daß die axialen und peripheren Zonen mit Prallblechen (7, 11; 28, 34) ausgestattet sind, welche die Luft zwingen, quer zu den durch die Elementarbündel strömenden Rauchgasen nacheinander von der axialen Zone zur peripheren Zone und dann von der peripheren Zone zur axialen Zone oder umgekehrt zu strömen.

3. Wärmetauscher nach den Ansprüchen 1 oder 2, dadurch gekennzeichnet, daß er Kaltlufteintrittsstutzen (2, Fig. 1) unterhalb und Warmluftaustrittsstutzen (3) oberhalb der axialen Zone aufweist.

4. Wärmetauscher nach einem der Ansprüche 1 bis 3, dadurch gekennzeichnet, daß er einen ersten Rohrbündelkranz (8, 9, 12, 13) für den Rauchgasdurchtritt in der Strömungsbahn eines ersten Luftkreislaufs und mindestens einen zweiten, vom ersten Kranz getrennten Rohrbündelkranz (24, 25, 30, 31; Fig. 3) für den Rauchgasdurchtritt in der Strömungsbahn eines zweiten, koaxial zum ersten angeordneten Luftkreislaufs aufweist.

## Claims

1. A vertical heat exchanger for heating air under pressure in a counter-flow to smoke flowing through bundles of tubes contained within a cylindrical shell (1) including at least one expansion joint, said bundles of tubes (8, 9, 12, 13; 24, 25, 30, 31) being regularly and ringwise distributed across two air circulation zones, an axial zone (6 and 27) and a peripheral zone (10, 29), and their weight being directed to bear upon peripheral support members (14) disposed around the bottom portion of the heat exchanger, characterized in that the bundles of tubes are separated by radial baffles (20, 21; 37, 38), that said baffles are connected to the top tubular plates supporting the bundles of tubes, so as to transmit the weight of the bundles to the peripheral support members (14), and that expansion joints (17, 19) are disposed between the bottom portion of the cylindrical shell (1) and the botom tubular plates of the bundles (16).

2. A heat exchanger according to claim 1, characterized in that the bundles of tubes are sub-divided into a plurality of superposed unit bundles (8, 12, ... 9, 13), and that the axial and peripheral zones are provided with baffles (7, 11; 28, 34) for causing the air to flow in alternation from the axial zone towards the peripheral zone and then from the peripheral zone towards the axial zone, or vice versa, in a cross-flow to the smoke flowing through the unit bundles.

3. A heat exchanger according to claim 1 or 2, characterized in that it includes a cold air inlet (2, Fig. 1) and a heated air removal duct (3) respectively disposed beneath and above the axial zone.

4. A heat exchanger according, to any one of claims 1 to 3, characterized in that it includes a first ring of smoke-passing bundles of tubes (8, 9, 12, 13) disposed on the path of a first air circuit, at least one second ring of smoke-passing bundles of tubes (24, 25, 30, 31; Fig. 3) separated from the first ring and disposed on the path of a second air circuit coaxial with the first one.

# FIG.1

# FIG. 2

FIG.3

# FIG. 4